Europäisches Patentamt

European Patent Office

Office européen des brevets

(19)

(11) Publication number: **0 154 368**
A2

(12) # EUROPEAN PATENT APPLICATION

(21) Application number: 85200194.0

(22) Date of filing: 15.02.85

(51) Int. Cl.⁴: **A 23 K 1/00**
A 23 K 1/16, A 23 K 1/18
A 23 L 1/275

(30) Priority: 02.03.84 IT 1987584

(43) Date of publication of application:
11.09.85 Bulletin 85/37

(84) Designated Contracting States:
AT BE CH DE FR GB IT LI LU NL SE

(71) Applicant: ASCOR CHIMICI S.r.l.
Via Piana, 265
I-47032 Capocolle (Provence of Forli)(IT)

(72) Inventor: Cicognani, Paolo
S. Cristoforo-Cà di Mezzo 4
I-41010 Fiumana Di Predappio Forli(IT)

(72) Inventor: Massi, Nicola
Via Gennari 24/10
I-63023 Fermo Ascoli Piceno(IT)

(74) Representative: Riccardi, Sergio
Riccardi & Co. Via Macedonio Melloni, 32
I-20129 Milano(IT)

(54) Process for the production of a microencapsulated natural pigmenting agent for animal feed.

(57) The invention relates to a process allowing to produce a natural pigmenting agent for animal feed with high stability in comparison with the conventional pigmenting agents blended with feed; such a result is obtained by microencapsulating the active substance, so that the latter is neither attacked by the feed ingredients nor by external agents, taking particular measures to avoid degradation of microcapsules.

EP 0 154 368 A2

./...

Croydon Printing Company Ltd.

Fig. 1

ROCHE VALUES IN THE TEST PERIOD

- 1 -

"Process for the production of a microencapsulated natural pigmenting agent for animal feed"

The present invention relates to a process for the production of a natural pigmenting agent for animal feed having superior characteristics of stability and better results in comparison with similar products now available on the market.

In the last decades the continuous and broad research activity in the field of the animal nutrition made development and manufacture of natural pigmenting agents possible, among which it was found particularly effective that marketed under the brand VENAXAN, consisting of pigmenting agents of vegetable origin, based on a mixture of carotenoids and xanthophylls.

Control of pigmentation is the basis for the assignment of a better grade to avicultural products on the market, with consequent attainment of higher profits.

The desired colour for several products such as eggs, meat etc. may be variable according to habits and use for which the product is intended. Therefore the farmer, once he decided the market field in which to operate, may easily obtain and control pigmentation of his products at reduced costs, using the pigmenting agent.

Control of pigmentation, particularly in the avicultural products, is important at least for the following reasons.

The avicultural products with a proper and uniform pigmentation have a more profitable market; most markets require well pigmented eggs and meat; avicultural production tends to whiten in the periods of strong inducement due to a disease so that it is indispensable a quick and safe restoration of pigmentation returning to the optimal hue; and finally the producers of noodles require a product with a colour that may be warranted only by using a natural pigmenting agent.

By using normal pigmenting agents it is not possible to obtain a persisting homogeneous colour, while the above mentioned product VENAXAN, being a natural vegetable pigmenting agent added to the feed, allows to remove said drawback. Such a product keeps egg pigmentation constant, in spite of the influence of negative factors such as seasonal variations and sudden changes in temperature, and allows also to maintain a stable standardized colour.

This natural pigmenting agent has incontestable good qualities in comparison with synthetic pigmenting agents, as the latter have the undesirable defect to behave in such a way that noodles, although they have a strong yellow colour at kneading, during drying become brown and then end up to be white after cooking.

Mayonnaise, cream, custard, cakes prepared by housewives or industries with avicultural products, suitably pigmented with said product, will always have a constant colour all the year round as they were produced with country eggs taken in the best season.

As a basis for most yellow or red pigmenting agents of vegetable origin there is a group of strictly related compounds known as carotenoids or provitamin A.

Research showed that most carotenoids are not utilized by the organism as pigmenting agents but are transformed into colorless vitamin A which is almost completely deposited in the liver.

A small group of natural pigmenting agents, the xanthophylls, being not transformed in the liver, are deposited directly in the tissues (more particularly in the lipids) so as to cause pigmentation of skin, fat, flesh and egg yolk.

Most effective xanthophylls are lutein, bixin, capsanthin and the like. Common sources of xanthophylls are maize, corn gluten and dehydrated lucerne meal (alfalfa, Medicago sativa).

However, it has been found that the control of the correct quantity of xanthophylls supplied with normal feed is a particularly useless task for both the farmer and the nutrition expert, for the following reasons:

(1) xanthophyll contents is varying according to the characteristics of each individual crop;

(2) xanthophyll quantity decreases very rapidly, more particularly when lucerne is touched by the inert gas formed in the storage room;

(3) cellulose and lignin, which are contained in a high percentage in the dehydrated lucerne meal, envelop the xanthophylls so as to reduce dramatically the degree of assimilation and bioavailability;

(4) environmental temperature highly affects quantity of feed ingested, and consequently also the quantities of ingested xanthophylls and lutein will vary considerably;

(5) the high contents of raw fiber of lucerne meals often causes serious digestion problems, especially when said meal is used in great quantity to obtain well pigmented egg yolks; and

(6) the raw materials used tend to give a flattening of hues toward relatively low shades because of the unsteady quantity of xanthophylls.

The product used in the process according to the present invention, which as already stated is sold under the trade name VENAXAN, is a natural source of carotenoids and xanthophylls highly concentrated in the form of a unique molecular encapsulation protecting them from oxidation and deterioration and at the same time allowing their maximum  biological activity, in view of the techniques of stabilization of these active substances.

This natural pigmentation has the advantages, inter alia, to be very efficient because at the normal blending dosage it has a yield which is more than double in respect of those obtained with similar products; to be totally of biological origin because its active substances are not chemically combined with any other active substance; and to have a rapid effect, because the desired pigmentation of the egg yolk is obtained in half the time of the conventional pigmenting agents.

More particularly its main feature is to be stable. The unique form of molecular encapsulation protects the active substances contained in it from oxidation during stockage and from attack of the oligoelements and humidity of finished feed.

The preparation of the invention acts with particular efficiency in the moments of greater need; indeed it has been found to be particularly efficient during the periods of stress of the animals, restoring immediately the normal colour. It is also reliable, as its active substances are uniform, stable and scientifically controlled.

Excellent results were also obtained when the preparation was used only for the finishing nutrition. It does not develop a tolerance and pigmentation is always increasing in a proportional manner.

With most conventional pigments a maximum colour of the egg yolk, corresponding to the fourth degree or score of the NEPA scale, is attained in the most favorable cases.

In order to reach higher hues it is necessary to add great quantities of pigmenting products because beyond these values the colour obtained with conventional feed

containing xanthophylls, increases in a less proportioned way. On the contrary with the preparation of the present invention, colour may be raised up to the sixth degree of the NEPA scale and more.

The high reliability of the preparation, its uniformity and stability make also possible to compile tables of use allowing to obtain the desired pigmentation for both eggs and poultry, thus giving the farmer a dependable guide for attaining the desired result rather than making attempts often frustrating and causing a considerable depreciation of the avicultural product.

However, microencapsulation of such a product results to be very difficult with the conventional microencapsulation methods, and for this reason it was necessary to study and develop a specific process of microencapsulation for said product VENAXAN, that is to say comprising modifications to the conventional process because of the following specific conditions: if the oil of vegetable origin containing carotenoids and so forth (the VENAXAN product) is microencapsulated with the conventional methods providing use of a membrane consisting of gelatin and arabic gum or indifferently gelatin and sodium hexamethaphosphate, it shows a negatively anomalous behaviour: indeed it happens that the chemical-physical relation of the inner phase (VENAXAN oil) with the membrane is not inert and stable as it should occur and it actually occurs in most cases; on the contrary there is a marked action of interference, attack, degradation of the membrane by said VENAXAN oil with the final result of a partial permeability and a physical weakening of said membrane.

In other words the VENAXAN oil tends to come out from the membrane rather than being entrapped or enveloped by it in a sufficiently stable way and moreover at the least manipulation or mechanical stress, microcapsules are brocken, consequently causing an intolerable presence of an excess quantity of free oil in the microencapsulated powder, with all the relevant drawbacks caused thereby (powder packing, uneven distribution, lack of stability etc.).

In order to eliminate these drawbacks which are certainly sufficient to render unfeasible the microencapsulation of this product, it was necessary to take such measures as to carry out modifications of the membrane structure. In other words the final obejct was to make said membrane more resistant. In order to obtain this, it was necessary to work on several parameters and to modify the conventional microencapsulation methods, and the various modifications studied and carried out to make possible microencapsulation of said product are illustrated hereinafter.

DIAMETER OF MICROCAPSULES

The diameter of microcapsules practically was the first element examined, taking as a basis the principle according to which the physical and mechanical strength of the microcapsules is inversely proportional to their size.

Widely satisfactory improvements were obtained by using a size range lower than 10 microns. In order to obtain such a small size in comparison with the diameters which can be obtained with the conventional microencapsulation methods, it was necessary to make the following changes in said method:

(1) increase of pH value to a range of less acidity, that is toward a range between 5.2 and 5.7; (2) increase of aqueous dilution again in comparison with the conventional methods of microencapsulation in the lower size range, whereby such a higher dilution may be indicated as a ratio dry gelatin/water of 1:70.

These measures allow to define the process of the invention as a true molecular microencapsulation, as it was practically possible to operate at a really minimum size range.

MEMBRANE DEPOSITION VELOCITY

It was possible to prove by means of comparative tests, that if the membrane formation is carried out in a longer time, strength of the microcapsules containing the VENAXAN product is further improved, probably because of a reduction or elimination of microporosity of said membrane, resulting in the creation of a thicker and more continuous membrane.

START TEMPERATURE OF COACERVATION STAGE

As it was proved that the VENAXAN product hardly tolerates temperatures in excess of 35°C under penalty of degradation, the temperature of coacervation start, in other words that stage in which all the elements and the components of the process are present without exception, was brought to the limit of the range where the true membrane deposition starts, i.e. about 32°C.

This is made operatively possible by a proper sequence of additions, each addition being carried out at a well determined temperature, which must be reached by suitable technological methods and by using thermostatic heaters.

DRYING

An important modificaton was carried out in the final composition of the powder containing the microcapsules, and more particularly the composition was enriched is silicic anhydride for the following reasons:

(A) better separation among microcapsules in order to obtain a better homogeinity of microcapsule distribution, so as to avoid that they stick or pack to each other;

(B) better preservation from humidity; VENAXAN microcapsules indeed show their above stated particular brittleness especially when they are in a wet condition.

Although the above mentioned modifications allowed to attain a satisfactory condition as to the strength of the microcapsules, it was observed that for the stability of the microencapsulated product, a long residence in a vehicle having a relatively high moisture contents is not suitable. In fact, since its final destination as finished product, is the incorporation into animal feed generally having a considerable moisture contents, it is advisable to adapt a protection system for the microcapsules.

The increased amount of silicic anhydride, which is properly mixed to the already dried microcapsules, is enriching the layer which is normally formed around the microcapsules, bodily adhering thereto.

Humidity contained in the powder is therefore being fixed in the layer of silicics anhydride with which it has a preferential compatibility, consequently avoiding to disturb directly the microcapsules. In other words the compact layer of silicic anhydride acts as a barrier and trap for the surrounding humidity which otherwise would go into direct contact with the membrane, and in such a case an interruption in the system of proctetion of the stability of the VENAXAN product would occur. As an evidence of this the following test was carried out:

Sample A: microencapsulated VENAXAN powder containing 30% silicic anhydride and 5% moisture.

Sample B: microencapsulated VENAXAN powder containing 45% silicic anhydride and 5% moisture.

Both samples were examined 45 days after their preparations and gave the following results: Sample A when handled leaves red traces being a sign of partial collapse of microcapsules, while Sample B under the same handling force does not leave red traces or said traces are totally negligible, being a clear sign of greater stability resistance and seal of the microcapsules.

Preparation Example

1) - Solution N°1

In a 600 ml beaker, 30g of gelatine for foodstuffs having a Bloom index between 250 and 350 is prepared. Add 270 ml of cold distilled water. Stir and let stand cold for 30 minutes. Heat in a water bath up to 60°C while stirring thoroughly the solution. If necessary, add some droplets of N-octyl alcohol to remove possible foam formation.

2) - Solution N°2

270 ml of cold distilled water are placed in a 600 ml beaker and then stirred. Add very slowly 30 g of cold gum arabic for pharmaceutical use. Then effect cold stirring until a complete solution is reached. Filter to remove possible vegetal residues typical of gum arabic.

3) - Solution N°3

In a 5 liter beaker place 2100 ml of distilled water.

4) - Solution N°4

Take 200 ml of water from Solution N°3 and add to Solution N° 1. Heat the whole to 35°C and place it under a homogenizer so as to position its head just below the surface of the solution. Add slowly 480 g of VENAXAN product at a temperature of 25°C and at the same time increase gradually homogenizer speed until a droplet size lower than 10 microns is obtained, checking the attainment of said size at the microscope. Bring and keep the dispersion at a temperature of 34°-35°C with stirring.

5) Heat Solution N°2 to a temperature of 35°C and the dilution water (Solution N°3) to a temperature 31°-32°C.

6) Place the beaker containing the dilution water under a homogenizer and add firstly Solution N°4 and then Solution N°2 using the latter also as a cleansing medium to remove the solution residues from its beaker. The final temperature attained should be 32°+ 0.5°C. In case this does not occur, adjustment of temperature is required.

7) Bring pH value to 5.5 (a little less if droplet size is generally close to 10 microns, a little more if the size is not so close).

8) Start a cooling stage operating in such a way that the temperature falls with the following rate : 1°C every 6-10 minutes down to 27°C ; 1°C every 15-20 minutes from 27° to 20°C; 1°C every 4-5 minutes from 20°C to 10°C. Keep the temperature at 10°C or below for at least one hour.

9) Add 15ml of glutaricalchehyde or formic aldehyde and stir overnight.

10) Add slowly 500 g of sodium sulphate and raise temperature up to 30-32°C.

11) Add 100g of silicic anhydride slowly and with a sufficiently intense agitation for obtaining a good dispersion.

12) Keep the whole at the temperature of 30°-32°C and stir for 30-40 minutes.

13) Filter under vacuum

14) Dry in an air circulation oven, adjusting temperature of incoming air at 35°C.

15) When drying is completed, disintegrate the formed lumps and add 180g of silicic anhydride, operating so as to obtain a good and uniform dispersion.

16) Pass through a 100-150 micron sieve.

In this way molecular microcapsules are obtained in which the natural pigments are highly protected and at the same time can be easily dispersed in animal feed.

In vivo tests were then effected by using laying hens of Warren race, for verifying bioavailability of the product, as well as lab tests to check stability of the xanthophyll contents of said product.

The pigmenting agent used for these tests is the product called VENAXAN RED containing natural red xanthophylls (mainly capsanthin) produced by means of the molecular microencapsulation process of the present invention.

A screening was preliminarly effected to evaluate the biological response to the treatment and to determine the dosage of VENAXAN in the diet in order to obtain a commercially valuable egg. These tests were effected on ten laying hens, divided in two groups of five hens each.

In order to exhaust reserves of carotenoids, all hens were fed for 15 days with a diet based on white maize, balanced and suitable for the needs of laying hens. Subsequently group 1 received increasing doses of VENAXAN RED while group 2 received a constant integration of 430 mg of canthaxanthin every 100kg of feed.

After having checked the complete bioavailability of VENAXAN and determined the optimal dosage, the final test was carried out.

In the final test 200 hens divided into four groups indicated by letters, a,b,c,d were used, each group being fed with a traditional feed, additivated in three tests with different types of pigmenting agents (see Table 1).

## TABLE 1

(a) traditional feed available on the market, usable xanthophylls: 19 p.p.m.

(b) traditional feed + 595 mg of total xanthophylls from VENAXAN RED (product of the present invention) every 100kg of feed.

(c) traditional feed + 430 mg of canthaxanthin from CAROPHYLL RED (a product of Hoffmann-La Roche S.A.) every 100 kg of feed.

(d) traditional feed +2170 mg of total xanthophylls from a conventional integrator every 100kg of feed.

Like in the preliminary test, hens were firstly fed for 15 days with diet based on white maize, suitable for laying hens, so as to obtain exhaustion of pigments stored in the reserve fat. Eggs of each group are gathered daily and evaluated with the Roche scale in order to define colour variations.

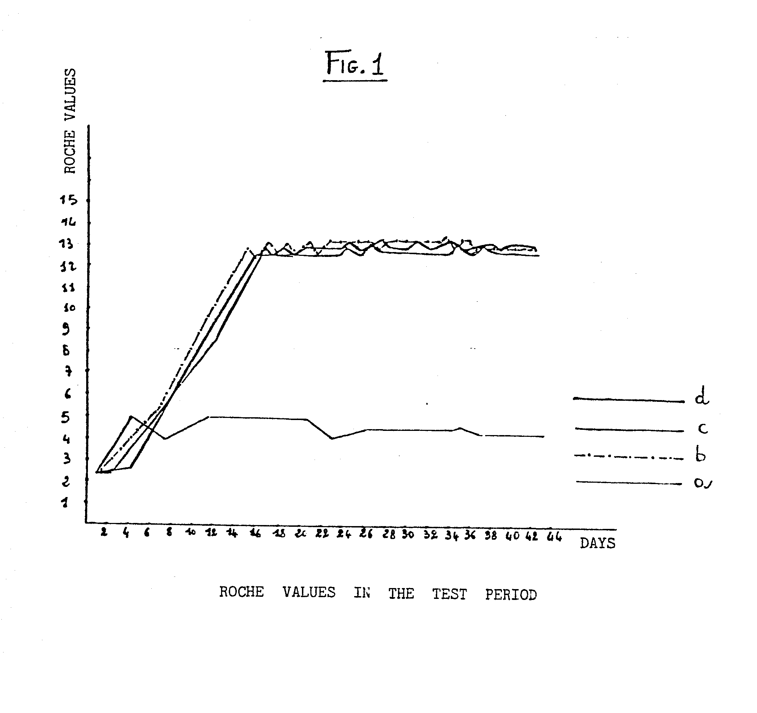

In Fig. 1 of the accompanying drawing, values of the Roche scale are shown for the entire duration of the test, said values being taken after nutrition with a diet based on conventional feed (a) and after administration of the feeds indicated with (b), (c) and (d) in Table 1.

It is to be noted that the administration of the three feeds additivated with the pigmenting agents causes a practically identical yolk hue at a visual evalutation (Roche scale). This brings to the conclusion that the VENAXAN product is totally bioavailable and its coefficient of pigmenting activity may be evaluated around the value of 4,5.

In order to evaluate stability of xanthophylls contents in a sufficiently short time a forecast system based on a Stability Accelerated Program (SAP) was used.

Tests were carried out at temperatures of 35°C, 45°C, 55°C. After an initial analysis, it was determined after which time interval the sample under examination had lost 10% of its initial contents and to do so, homogeneous samples of VENAXAN RED were placed in thermostatic environments at the above stated temperatures.

After a certain time (one week) samples were taken, starting from those kept under higher temperature, and analysis was repeated. With successive repetitions of takings and analysis it could be possible to determinate after which time interval each sample lost 10% of its initial contents.

At this point by means of extrapolation it was evaluated that VENAXAN RED will undergo such a degradation in more than two years. This fact, combined with the preceding test of bioavailabile, brings to the conclusion that the VENAXAN RED product, in the field of natural pigmenting agents, costitutes a considerable improvement in modern animal nutrition, more particularly due to the microencapsulation process of the present invention, allowing to obtain such a highly stable and bioavailability product, as it was never possible to be obtained with the conventional methods of preparation.

It is to be understood that several variations, modifications, additions and/or

0154368

substitutions of phases, parameters and elements may be resorted to the process of the present invention, without departing however from its spirit and objects, or falling outside its scope of protection, as it is also defined in the appended claims.

CLAIMS

1) Process for the production of a microencapsulated natural pigmenting agent for animal feed, characterized by the fact that in order to make stable and bioavailable the natural pigmenting agent based on vegetable oil containing natural carotenoids and xanthophylls, the membrane of the microcapsules is made more resistant by suitable modification of the operative parameters of the microencapsulation process.

2) Process according to Claim 1, characterized by the fact that the microcapsule diameter is lowered to a size range of molecular level, of less than 10 microns.

3) Process according to Claim 1, characterized by the fact that in the microcapsule separation stage the pH value is brought to a range comprised between 5.2 and 5.7.

4) Process according to Claims 2 and/or 3, characterized by the fact that the aqueous dilution is increased to a ratio dry gelatin/water of about 1:70.

5) Process according to one or more of the preceding claims, characterized by the fact that the velocity of membrane formation is lowered in order to create a thicker and more continuous membrane.

6) Process according to one or more of the preceding claims, characterized by the fact that the microencapsulation coacervation stage is started at a temperature at the border of the membrane deposition starting range, of about 32°C, by means of a controlled sequence of additions at precise temperatures obtained through thermostatic heaters.

7) Process according to one or more of the preceding claims, characterized by the fact that the composition of the powder for drying and separating the microcapsules is modified by enriching it with a considerably higher amount of silicic anhydride, mixed to already dried microcapsules, in order to form a barrier and trap layer against moisture around said microcapsules.

8) Process for the production of a microencapsulated natural pigmenting agent for animal feed, substantially as hereinbefore described and illustrated in the examples given, for the aforementioned objects.

9) Natural pigmenting agent for animal feed, whenever made with the molecular microencapsulation process according to one or more of Claims 1-8.

10) Microencapsulated natural pigmenting agent for animal feed with high stability and bioavailability, obtained by the process and the test methods above illustrated and described, for the aforementioned objects.

0154368

FIG. 1

ROCHE VALUES IN THE TEST PERIOD